# NEUE EUROPÄISCHE PATENTSCHRIFT

(11) **EP 1 391 260 B2**
(45) Veröffentlichungstag und Bekanntmachung des Hinweises auf die Entscheidung über den Einspruch: **19.11.2014**
(45) Hinweis auf die Patenterteilung: 30.05.2007
(21) Anmeldenummer: 03014626.0
(22) Anmeldetag: 26.06.2003
(51) Int. Cl.: B23K 33/00, B60K 13/04, B23K 9/00

(54) **Verbindung eines dünnwandigen Körpers mit einem dem gegenüber dickerwandigen Körper**
Assembly of a thin-walled part to a thicker-walled part
Assemblage d'un objet à paroi mince à un objet à paroi épaisse

(30) Priorität: 22.08.2002 DE 10239259
(43) Veröffentlichungstag der Anmeldung: 25.02.2004
(73) Patentinhaber: ROTH-TECHNIK AUSTRIA Gesellschaft m.b.H., 3193 St.Aegyd a.N. (AT)
(72) Erfinder: Mai, Hans-Peter, 76456 Kuppenheim/Oberndorf (DE)
(74) Vertreter: Wiedemann, Markus

(56) Entgegenhaltungen:
- EP-A- 1 106 414
- DE-A- 3 842 452
- DE-A- 19 835 992
- DE-C- 941 169
- US-A- 3 515 841
- PATENT ABSTRACTS OF JAPAN vol. 1997, no. 12, 25. Dezember 1997 (1997-12-25) & JP 09 220673 A (MITSUBISHI MOTORS CORP), 26. August 1997 (1997-08-26)
- PATENT ABSTRACTS OF JAPAN vol. 2000, no. 12, 3. Januar 2001 (2001-01-03) & JP 2000 264272 A (NISSAN SHATAI CO LTD), 26. September 2000 (2000-09-26)

## Beschreibung

### Stand der Technik

Die Erfindung betrifft ein Nutzfahrzeug mit einer fahrzeugseitigen Montageplatte und einem Abgasschalldämpfer, wobei eine stoffschlüssige Verbindung von Bauelementen eines Gehäuses mit einem Körper vorgesehen ist, wobei die Wandstärke der Bauelemente jeweils geringer ist als die Wandstärke des Körpers.

Eine solche stoffschlüssige Verbindung kann beispielsweise gefordert sein, wenn ein aus mehreren dünnwandigen Blechen bestehendes Gehäuse eines Anbauteils eines Fahrzeugs mit einer demgegenüber dickerwandigen, fahrzeugseitigen Montageplatte verbunden werden soll.

Eine stoffschlüssige Verbindung zwischen einer an einem Fahrzeug lösbar befestigten vertikalen Montageplatte und einem von der Montageplatte horizontal auskragenden Abgasschalldämpfergehäuse ist beispielsweise aus der EP 1 106 414 A2 bekannt. Dazu sind an der Montageplatte in das Abgasschalldämpfergehäuse ragende Stützrohre befestigt, welche das Abgasschalldämpfergehäuse an Zwischenwänden abstützen. Eine Seitenwand des Abgasschalldämpfergehäuses ist außerdem mit der Montageplatte verschweißt.

Die DE 941 169 C beschreibt eine durch Schweißung oder Lötung hergestellte Metallverbindung zwischen einem dünnen Blech und einem Metallgegenstück beliebiger Dicke. Die DE 198 35 992 A2 beschreibt eine Verbindung zwischen einem Außenblechbauteil und einem Innenblechbauteil, wobei das Außenblechbauteil auf der Innenfläche einen umbördelten Rand aufweist und das freie Ende des Innenblechbauteils auf den umgebördelten Rand des Außenblechbauteils aufgesetzt und die Verbindung mittels einer Schweißverbindung erfolgt In der US 3 515 841 A wird eine stoffschlüssige Verbindung zwischen zwei Blechen beschrieben, wobei der Rand des einen Blechs in sich umgebördelt ist. Die patent abstracts of Japan vol. 1997, no.12, 25 (1997-12-25) offenbaren eine stoffschlüssige Verbindung zwischen einem Karosseriebauteil eines Fahrzeugs und der Fahrzeugstruktur.

### Aufgabe der Erfindung

Der Erfindung liegt die Aufgabe zugrunde, ein Nutzfahrzeug mit einer stoffschlüssigen Verbindung der eingangs erwähnten Art bereitzustellen, welche einfach und kostengünstig zu fertigen ist. Weiterhin soll sie sich durch eine hohe Steifigkeit, Festigkeit und Dichtigkeit auch über einen langen Zeitraum auszeichnen.

Diese Aufgabe wird erfindungsgemäß durch die Merkmale des Patentanspruchs 1 gelöst.

### Vorteile der Erfindung

Das Nutzfahrzeug mit der Verbindung gemäß Anspruch 1 hat den Vorteil, dass wegen der Kombination aus Falz und Stoffschluss eine hohe Dichtigkeit des Falzes gewährleistet ist, welche insbesondere bei durchströmten Körpern wie beispielsweise Abgasschalldämpfern, Katalysator- und Filtergehäusen und dergleichen wichtig ist. Darüber hinaus wird durch den Falz die Wandstärke der Bauelemente im Verbindungsbereich erhöht, wodurch sich der Stoffschluss beispielsweise durch Schweißen mit dem dickerwandigen Körper besser herstellen läßt. Weiterhin erhöht der Falz die Steifigkeit und Festigkeit der Verbindung wesentlich, so dass bei der eingangs zitierten Verbindung des Stands der Technik auf die Stützrohre verzichtet werden könnte, was einen einfacheren, leichteren und kostengünstigeren Aufbau bedingt. Wichtig ist weiterhin, dass sich der Stoffschluss höchstens über n-1 Falzlagen erstreckt. Dann ist zumindest eine äußere Falzlage nicht von der stoffschlüssigen Verbindung betroffen, welche die anderen Falzlagen umschlingt und deshalb in besonderem Maße gegenüber Belastungen empfindlich ist, welche die Tendenz haben, den Falz zu lockern oder aufzubiegen. Diese Maßnahme trägt folglich maßgeblich zur Erhaltung der Dichtigkeit des Falzes bei, außerdem ergibt sich eine hohe Dauerfestigkeit der Verbindung.

Die Verbindung ist bei einem Nutzfahrzeug zwischen einer im wesentlichen vertikalen, fahrzeugseitigen Montageplatte und einem hiervon im wesentlichen horizontal auskragenden Gehäuse eines Abgasschalldämpfers ausgebildet. Diese Einbausituation ist bereits in der eingangs erwähnten DE 199 59 350 A1 beschrieben. Hierbei ergibt sich wegen der horizontal frei auskragenden Lage des Abgasschalldämpfergehäuses eine relativ hohe Schwingungsbelastung der Verbindung mit der Montageplatte, insbesondere durch wechselnde Zug- und Druckkräfte bzw. Biegemomente. Dann besteht in verstärktem Maße die Tendenz, dass der aus mehreren Falzlagen gebildete Falz aufgebrochen wird. Dies wird jedoch durch die erfindungsgemäße Ausbildung des Stoffschlußes zwischen Falz und Montageplatte mit wenigstens einer frei gelassenen äußeren Falzlage zuverlässig verhindert, weil die äußere Falzlage insbesondere einer wesentlich geringeren Zugbelastung ausgesetzt ist.

Vorzugsweise verbindet der Falz eine im wesentlichen parallel zur Montageplatte verlaufende Seitenwand und eine senkrecht zur Montageplatte verlaufende Mantelwand des Gehäuses miteinander formschlüssig.

Gemäß einer Weiterbildung weist die Montageplatte eine dem Querschnitt des Gehäuses entsprechende Umfangslinie auf und ist schwalbenschwanzartig ausgebildet ist, wobei ihr Flächenschwerpunkt in einer oberen Querschnittshälfte des Gehäuses liegt. Dann ist der Falz lediglich in einem oberen Abschnitt mit der Montageplatte stoffschlüssig verbunden. Hierdurch ergibt sich einerseits eine geringe Schweißnahtlänge und ein geringeres Gewicht der nun nach unten offenen Montageplatte. Andererseits weist die Schweißnaht eine in bezug zur Belastung optimale Lage auf, da im oberen Abschnitt der Zugspannungsanteil der Biegespannung vorliegt, welche aus der Gewichtskraft des Abgasschalldämpfers resultiert.

In besonders zu bevorzugender Weise ist der Falz und an einem Rand des Gehäuses ausgebildet ist und ragt nach außen weg ragt. Dann kann der Falz bodenseitig eine Stirnfläche der Montageplatte kontaktieren und mit dieser durch eine Kehlnaht verbunden sein. In diesem Fall erstreckt sich die Kehlnaht in einer vertikalen Querschnittsebene gesehen über alle Falzlagen mit Ausnahme der beiden oberen, von der Montageplatte entfernt gelegenen Falzlagen.

Alternativ kann der Falz von einer Stirnfläche der Montageplatte um eine Falzlage versetzt angeordnet und mit dieser durch eine Kehlnaht verbunden sein. Dann erstreckt sich die Kehlnaht in einer vertikalen Querschnittsebene gesehen beispielsweise über alle Falzlagen mit Ausnahme einer oberen und einer unteren Falzlage. In beiden Fällen weist der Falz vorzugsweise fünf Falzlagen auf.

Die erfindungsgemäße Verbindung kann für jegliche Art von dünnwandigem Körper mit einem demgegenüber dickerwandigen Körper verwendet werden, beispielsweise zur Verbindung von dünnwandigen Schalldämpfergehäusen, Rußfiltergehäusen und Katalysatorgehäusen und dergleichen mit einer Montageplatte, welche an dem Fahrzeug festgelegt ist, oder direkt mit einem Rahmenteil des Fahrzeugs.

### Zeichnungen

Ausführungsbeispiele der Erfindung sind in den Zeichnungen dargestellt und in der nachfolgenden Beschreibung näher erläutert. In den Zeichnungen zeigt
- Fig. 1: eine perspektivische Ansicht eines Abgasschalldämpfers mit einem bevorzugten Ausführungsbeispiel der erfindungsgemäße Verbindung;
- Fig.2: eine perspektivische Ansicht einer weiteren Ausführungsform eines Abgasschalldämpfers;
- Fig.3: eine perspektivische Ansicht einer weiteren Ausführungsform eines Abgasschalldämpfers;
- Fig.4: eine Querschnittsdarstellung entlang der Linie IV-IV von Fig.1;
- Fig.5: eine Querschnittsdarstellung entlang der Linie V-V von Fig.2;

### Beschreibung der Ausführungsbeispiele

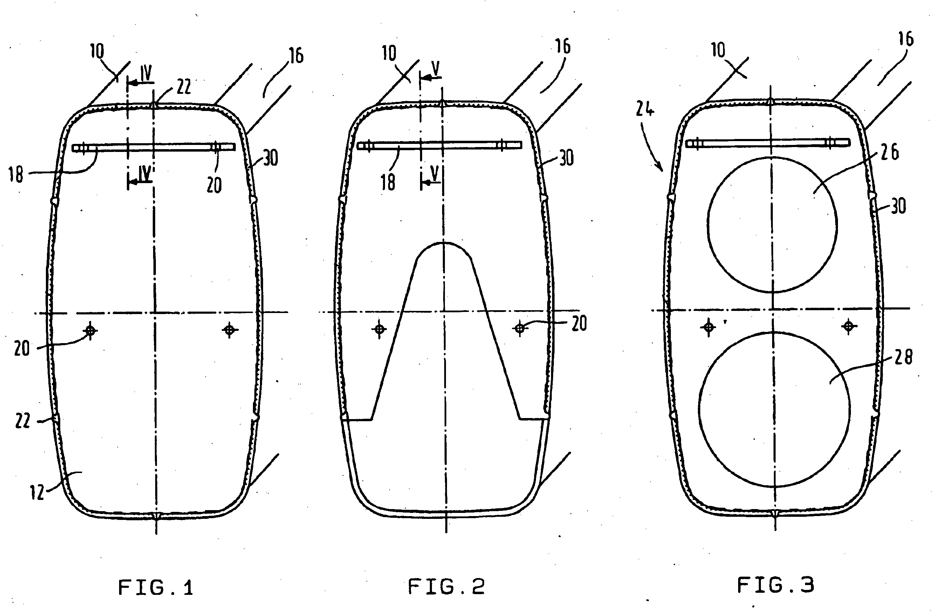

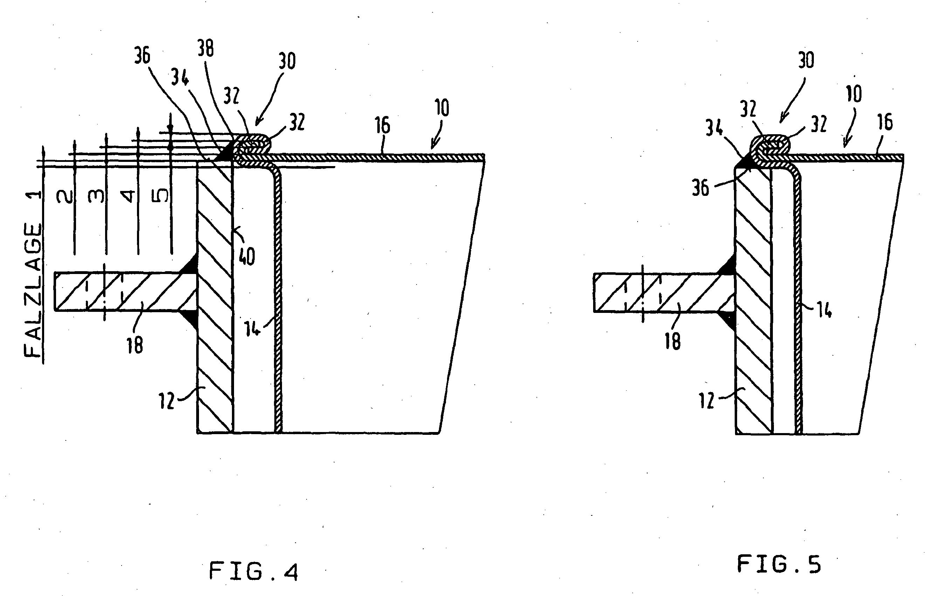

Im bevorzugten Ausführungsbeispiel nach Fig.1 ist mit 10 ein Gehäuse eines Abgasschalldämpfers eines Nutzfahrzeugs bezeichnet, welches mit einer im wesentlichen vertikalen, fahrzeugseitigen Montageplatte 12 verbunden ist. Der Abgasschalldämpfer samt Montageplatte 12 ist in seiner Gebrauchslage dargestellt, d.h. dass in den Figuren oben dargestellte Bauteile auch oben eingebaut sind. Die Montageplatte 12 dient zur lösbaren Befestigung des Gehäuses 10 des Abgasschalldämpfers an einem Rahmenteil des Nutzfahrzeugs. Das Gehäuse 10 besteht aus zwei stirnseitigen, parallel zur Montageplatte 12 verlaufenden Seitenwänden 14, von welchen in Fig.4 aus Maßstabsgründen lediglich die montageplattenahe Seitenwand 14 gezeigt ist, sowie aus einer umlaufenden Mantelwand 16. Innerhalb des Gehäuses 10 des Abgasschalldämpfers sind hier nicht interessierende Rohre, Zwischenwände etc. dergleichen aufgenommen. Das im wesentlichen sich in horizontaler Richtung von der Montageplatte 12 weg erstreckende Gehäuse 10 wird folglich von dieser kragbalkenartig gehalten, weshalb die vom Eigengewicht des Abgasschalldämpfers und vom im Betrieb auftretenden Schwingungen herrührenden Schnittlasten - Biegemoment und Querkraft - an der durch die Montageplatte 12 gebildeten Einspannstelle am höchsten sind. Die Befestigung der Montageplatte 12 an dem nicht gezeigten Rahmenteil erfolgt über eine im oberen Bereich auf der vom Gehäuse 10 weg weisenden Seite der Montageplatte 12 vorzugsweise angeschweißte Querplatte 18 sowie mittels Durchgangsbohrungen 20, welche beispielsweise mit Innengewinden oder Schweißmuttern versehen sind. Alternativ könnte die Querplatte 18 auch dadurch gebildet werden, dass die Montageplatte 12 endseitig umgebogen wird.

Die Montageplatte 12 weist eine dem Querschnitt des Gehäuses 10 entsprechende Umfangslinie auf und ist beispielsweise geschlossen, wie Fig.1 zeigt. Mit Hilfe von nach außen weg ragenden Nasen 22 kann eine Zentrierung des Gehäuses 10 gegenüber der Montageplatte 12 erfolgen. Gemäß dem Ausführungsbeispiel von Fig.2 ist die Montageplatte 12 schwalbenschwanzartig ausgebildet ist, wobei ihr Flächenschwerpunkt in einer oberen Querschnittshälfte des Gehäuses 10 angeordnet ist, wo der Zugspannungsanteil der Biegespannung auftritt. Gemäß einer weiteren, in Fig.3 gezeigten Ausführungsform kann die Montageplatte 12 auch mit Durchbrüchen 24 versehen sein, von welchen beispielsweise ein kreisförmiger Durchbruch 26 in einer oberen Hälfte und ein weiterer kreisbogenförmiger Durchbruch 28 in einer unteren Hälfte der Montageplatte 12 ausgebildet ist.

Wie insbesondere aus Fig.4 hervorgeht, ist die Wandstärke der Seitenwände 14 und der Mantelwand 16 des Gehäuses 10, welche vorzugsweise aus Stahlblech besteht, geringer als die der Montageplatte 12, weshalb die Wände 14, 16 des Gehäuses 10 dünnwandig in Bezug zur demgegenüber dickerwandigen Montageplatte 12 sind.

Die Verbindung zwischen dem Gehäuse 10 und der Montageplatte 12 erfolgt erfindungsgemäß durch einen n-lagigen Falz 30, welcher die montageplattennahe Seitenwand 14 mit der Mantelwand 16 des Gehäuses 10 formschlüssig verbindet und nach außen weg ragend einen Rand des Gehäuses 10 bildet. Die nicht gezeigte, montageplattenferne Seitenwand 14 ist ebenfalls über einen solchen Falz mit der Mantelwand 16 verbunden. Zur Bildung des Falzes 30 werden die Endabschnitte 32 jeweils einer Seitenwand 14 und der Mantelwand 16 ineinander eingerollt und miteinander verpresst, so dass ein dichter Verbund entsteht. Der Falz 30 besteht folglich aus abwechselnd übereinander angeordneten, einander kontaktierenden und im wesentlichen senkrecht zur Montageplatte 12 verlaufenden Falzlagen. In den Beispielen von Fig. 4 und Fig.5 weist der Falz 30 beispielsweise fünf Falzlagen 1, 2, 3, 4, 5 auf. Der Falz 30 ist mit der Montageplatte 12 stoffschlüssig verbunden, beispielsweise durch Schweißung mittels einer Kehlnaht 34, wobei sich der Stoffschluß im vorliegenden Fall höchstens über 4 Falzlagen und bei n-Falzlagen allgemein über höchstens n-1 Falzlagen erstreckt. Vorzugsweise ist wenigstens die äußere oder obere Falzlage 5 nicht vom Stoffschluß bzw. der Kehlnaht 34 erfasst.

Im Beispiel von Fig.4 erstreckt sich die Kehlnaht 34 in einer vertikalen Querschnittsebene gesehen über die mittleren Falzlagen 2 bis 4, während die obere Falzlage 5 und untere Falzlage 1 nicht erfasst wird. Hierzu ist der Falz 30 vorzugsweise von einer Stirnfläche 36 der Montageplatte 12 um die Falzlage 5 zurück versetzt angeordnet. Weiterhin ist eine zur Montageplatte 12 weisende, äußere Stirnfläche 38 des Falzes 30 mit der zum Gehäuse 10 weisenden Seitenfläche 40 der Montageplatte 12 etwa koplanar.

Da der Falz 30 vom Gehäuse 10 nach außen weg ragt, kann er Falz 30 bodenseitig die Stirnfläche 36 der Montageplatte 12 kontaktieren und mit dieser ebenfalls durch eine Kehlnaht 34 verbunden sein, wie die Ausführungsform gemäß Fig.5 zeigt. In diesem Fall erstreckt sich die Kehlnaht 34 in einer vertikalen Querschnittsebene gesehen beispielsweise von der bodenseitigen Falzlage 1 bis zur Falzlage 3, während die obere Falzlage 5 und die angrenzende Falzlage 4 nicht erfasst werden. Bei dieser Ausführungsform ist außerdem der Falz 30 bezogen auf den Querschnitt des Gehäuses 10 lediglich teilweise, insbesondere in einem oberen Bereich mit der Montageplatte 12 stoffschlüssig verbunden (Fig.2), wie bereits weiter oben erwähnt wurde.

Die Erfindung ist nicht auf eine Verbindung einer Montageplatte 12 mit einem Gehäuse 10 eines Abgasschalldämpfers beschränkt, sondern kann bei jeglicher Art von dünnwandigen, miteinander verfalzten Bauelementen zur Anbindung an einen demgegenüber dickerwandigen Körper verwendet werden, beispielsweise bei der Verbindung von Rohren und Behältern oder Gehäusen, bei der Verbindung von Deckeln und Gehäusen und insbesondere bei der Verbindung eines Gehäuses eines Anbauteils eines Fahrzeugs mit einer fahrzeugseitigen Montageplatte.

## Patentansprüche

1. Nutzfahrzeug mit einer fahrzeugseitigen Montageplatte und einem Abgasschalldämpfer, wobei eine stoffschlüssige Verbindung von Bauelementen (14, 16) eines Gehäuses (10) mit einem Körper (12) vorgesehen ist, wobei die Wandstärke der Bauelemente (14, 16) jeweils geringer ist als die Wandstärke des Körpers (12) und der Stoffschluss (34) durch eine Verschweißung gebildet wird, **dadurch gekennzeichnet, dass** die stoffschlüssige Verbindung zwischen der im wesentlichen vertikalen, fahrzeugseitigen Montageplatte (12) und miteinander endseitig verfalzten Wänden (14, 16) eines hiervon im wesentlichen horizontal auskragenden Gehäuses (10) des Abgasschalldämpfers ausgebildet ist, und die Bauelemente (14, 16) in Form der Wände an ihren Endabschnitten (32) miteinander verfalzt sind und der Falz (30) aus abwechselnd übereinander angeordneten, einander kontaktierenden und im wesentlichen senkrecht zu dem Körper (12) in Form der Montageplatte verlaufenden n-Falzlagen (1, 2, 3, 4, 5) besteht und sich der Stoffschluss (34) zwischen dem Falz (30) und dem Körper (12) in Form der Montageplatte über höchstens n-1 Falzlagen (1, 2, 3; 2, 3, 4) erstreckt.

2. Nutzfahrzeug nach Anspruch 1, **dadurch gekennzeichnet, dass** der Falz (30) eine im wesentlichen parallel zur Montageplatte (12) verlaufende Seitenwand (14) und eine senkrecht zur Montageplatte (12) verlaufende Mantelwand (16) des Gehäuses (10) miteinander formschlüssig verbindet.

3. Nutzfahrzeug nach Anspruch 2, **dadurch gekennzeichnet, dass** die Montageplatte (12) eine dem Querschnitt des Gehäuses (10) entsprechende Umfangslinie aufweist und schwalbenschwanzartig ausgebildet ist, wobei ihr Flächenschwerpunkt in einer oberen Querschnittshälfte des Gehäuses (10) liegt.

4. Nutzfahrzeug nach Anspruch 3, **dadurch gekennzeichnet, dass** der Falz (30) an einem Rand des Gehäuses (10) ausgebildet ist und nach außen weg ragt.

5. Nutzfahrzeug nach Anspruch 4, **dadurch gekennzeichnet, daß** der Falz (30) bodenseitig eine Stirnfläche (36) der Montageplatte (12) kontaktiert und mit dieser durch eine Kehlnaht (34) verbunden ist.

6. Nutzfahrzeug nach Anspruch 5, **dadurch gekennzeichnet, dass** sich die Kehlnaht (34) in einer vertikalen Querschnittsebene gesehen über alle Falzlagen (1, 2, 3) mit Ausnahme der beiden oberen, von der Montageplatte (12) entfernt gelegenen Falzlagen (4, 5) erstreckt.

7. Nutzfahrzeug nach Anspruch 4, **dadurch gekennzeichnet, dass** der Falz (30) von einer Stirnfläche (36) der Montageplatte (12) um eine Falzlage (5) versetzt angeordnet und mit dieser durch eine Kehlnaht (34) verbunden ist.

8. Nutzfahrzeug nach Anspruch 7, **dadurch gekennzeichnet, dass** die Kehlnaht (34) in einer vertikalen Querschnittsebene gesehen sich über alle Falzlagen (2, 3, 4) mit Ausnahme einer oberen und einer unteren Falzlage (1, 5) erstreckt.

9. Nutzfahrzeug nach Anspruch 6 oder 8, **dadurch gekennzeichnet, dass** der Falz (30) fünf Falzlagen (1, 2, 3, 4, 5) aufweist.

## Claims

1. A commercial vehicle, comprising: a mounting plate configured at the vehicle; and an exhaust gas muffler, wherein a bonded connection of components (14, 16) of a housing (10) with a body (12) is provided, wherein a wall thickness of the components (14, 16) is respectively smaller than a wall thickness of the body (12) and the bonded connection (34) is provided by welding, **characterized in that** the bonded connection is formed between the essentially vertical mounting plate 12) configured at the vehicle and walls (14, 16) of the housing (10) of the exhaust gas muffler essentially extending horizontally from the mounting plate, which walls are folded over each other at their ends, and the components (14, 16) configured as walls are folded over each other in their end sections (32), and a fold over (30) is formed by n-fold layers (1, 2, 3, 4, 5) arranged on top of each other in an alternating pattern so that they contact each other and extend essentially erpendicular to the body (12) configured as the mounting plate,and the bonded connection (34) extends over n-1 foldover layers at the most between the foldover (30) and the body (12) configured as the mounting plate.

2. Commercial vehicle according to claim 1, **characterised in that** the seam (30) is for metallurgically joining a side wall (14) extending essentially in parallel to said mounting plate (12) and a circumferential wall (16) extending perpendicular to said mounting plate (12), of the housing (10).

3. Commercial vehicle according to claim 2, **characterised in that** the mounting plate (12) has a peripheral line corresponding to the cross-section of the housing (10) and is formed in a dove-tail fashion, wherein its centre of gravity is in an upper half of the cross-section of the housing (10).

4. Commercial vehicle according to claim 3, **characterised in that** said seam (30) is formed at an edge of said housing (10) and protrudes toward the outside.

5. Commercial vehicle according to claim 4, **characterised in that** said seam (30), at its bottom, contacts an end face (36) of said mounting plate (12) and is joined to the latter by a fillet weld (34).

6. Commercial vehicle according to claim 5, **characterised in that** said fillet weld (34), as seen in a vertical cross-sectional plane, extends across all seam layers (1, 2, 3) except for the two top seam layers (4, 5) remote from the mounting plate.

7. Commercial vehicle according to claim 4, **characterised in that** said seam (30) is arranged offset from an end face (36) of said mounting plate (12) by one seam layer (5) and joined to the latter by a fillet weld (34).

8. Commercial vehicle according to claim 7, **characterised in that** said fillet weld (34), as seen in a vertical cross-sectional plane, extends across all seam layers (2, 3, 4) except for the top and bottom seam layers (1, 5).

9. Commercial vehicle according to claim 6 or 8, **characterised in that** said seam (30) has five seam layers (1, 2, 3, 4, 5).

## Revendications

1. Véhicule utilitaire avec une plaque de montage du côté du véhicule et un silencieux d'échappement, cependant qu'il est prévu une liaison de matières de composants (14, 16) d'un carter (10) avec un corps (12), l'épaisseur de paroi des composants (14, 16) étant respectivement plus faible que l'épaisseur de paroi du corps (12) et la liaison de matières (34) étant formée par une soudure, **caractérisé en ce que** la liaison de matières est configurée entre la plaque de montage (12) du côté du véhicule, substantiellement verticale, et des parois pliées (14, 16) l'une avec l'autre en extrémité d'un carter (10) qui fait saillie substantiellement horizontalement à partir de là du silencieux d'échappement et les composants (14, 16) sont pliés l'un avec l'autre en forme de parois au niveau de leurs sections d'extrémité (32) et le pli (30) étant constitué par n couches de pli (1, 2, 3, 4, 5) situées substantiellement perpendiculairement au corps (12) en forme de plaque montage, placées en alternance l'une sur l'autre, ayant contact l'une avec l'autre et la liaison de matières (34) s'étendant entre le pli (30) et le corps (12) en forme de plaque de montage sur n-1 couches de pli (1, 2, 3 ; 2, 3, 4).

2. Véhicule utilitaire selon la revendication 1, **caractérisée en ce que** le pli (30 relie de manière crabotée l'une à l'autre une paroi latérale (14) substantiellement parallèle à la plaque de montage (12) et une paroi d'enveloppe (16) du bâti (10) perpendiculaire à la plaque de montage (12).

3. Véhicule utilitaire selon la revendication 2, **caractérisée en ce que** la plaque de montage (12) présente une ligne de circonférence qui correspond à la section du bâti (10) et est configurée de type queue d'aronde, son centre de gravité de surface se situant dans une moitié de section supérieure du bâti (10).

4. Véhicule utilitaire selon la revendication 3, **caractérisée en ce que** le pli (30) est configuré sur un bord du bâti (10) et fait saillie vers l'extérieur.

5. Véhicule utilitaire selon la revendication 4, **caractérisée en ce que** le pli (30) a contact du côté du fond avec une surface frontale (36) de la plaque de montage (12) et est reliée à celle-ci par une soudure d'angle (34).

6. Véhicule utilitaire selon la revendication 5, **caractérisée en ce que** la soudure d'angle (34) s'étend sur toutes les couches de pli (1, 2, 3), ceci étant vu dans un plan de section, à l'exception des deux couches de pli supérieures (4, 5) situées éloignées de la plaque de montage (12).

7. Véhicule utilitaire selon la revendication 4, **caractérisée en ce que** le pli (30) est placé décalé d'une couche de pli (5) à partir d'une surface frontale (36) de la plaque de montage et est reliée à cette couche par une soudure d'angle (34).

8. Véhicule utilitaire selon la revendication 7, **caractérisée en ce que** la soudure d'angle (34) s'étend sur toutes les couches de pli (2, 3, 4), ceci étant vu dans un plan de section vertical, à l'exception d'une couche de pli supérieure et d'une couche de pli inférieure (1, 5).

9. Véhicule utilitaire selon la revendication 6 ou 8, **caractérisée en ce que** le pli (30) présente cinq couches de pli (1, 2, 3, 4 5).
